Europäisches Patentamt

European Patent Office

Office européen des brevets

(19)

(11) **EP 0 457 662 B1**

(12) **FASCICULE DE BREVET EUROPEEN**

(45) Date de publication et mention
de la délivrance du brevet:
**17.04.1996 Bulletin 1996/16**

(51) Int. Cl.$^6$: **B60R 25/10**

(21) Numéro de dépôt: **91401230.7**

(22) Date de dépôt: **13.05.1991**

(54) **Procédé d'analyse d'un rayonnement comme une onde ultrasonore, dispositif mettant en oeuvre le procédé et système d'alarme comportant un tel dispositif**

Verfahren und Vorrichtung zur Analyse von Strahlungen, wie zum Beispiel einer Ultraschallstrahlung, sowie Alarmanlage mit einer derartigen Vorrichtung

Method of analysis of radiated waves, such as an ultrasonic wave, device to put the method into operation and alarm system including such a device

(84) Etats contractants désignés:
**DE GB IT NL**

(30) Priorité: **18.05.1990 FR 9006224**

(43) Date de publication de la demande:
**21.11.1991 Bulletin 1991/47**

(73) Titulaire: **VALEO ELECTRONIQUE**
**F-94042 Creteil Cédex (FR)**

(72) Inventeur: **Iacovella, Rocco**
**F-94400 Vitry-sur-Seine (FR)**

(74) Mandataire: **Gamonal, Didier et al**
**Valeo Management Services**
**Sce Propriété Industrielle**
**2, rue André Boulle**
**B.P. 150**
**F-94004 Créteil (FR)**

(56) Documents cités:
**EP-A- 0 368 303          DE-A- 3 432 292**
**DE-A- 3 805 439          GB-A- 2 050 022**
**US-A- 4 729 661**

**Description**

La présente invention concerne un procédé d'analyse d'un rayonnement comme une onde ultrasonore, un dispositif mettant en oeuvre le procédé de l'invention et un système d'alarme comportant un tel dispositif.

Dans l'art antérieur on a déjà proposé des dispositifs à ultrasons qui émettent un rayonnement d'analyse ultrasonore qui est reçu par un détecteur. Le signal de détection est analysé par rapport à des formes de signaux préenregistrées de façon à déterminer si une condition d'alarme est remplie ou non. Dans le cas positif, l'alarme est déclenchée.

En général, dans l'art antérieur, on connaît des dispositifs d'analyse d'une onde dont on connaît la forme standard et dont les perturbations révèlent un phénomène à détecter. C'est le cas des systèmes de mesure de distance par émission réception ultrasonore ou des systèmes d'alarme volumétriques à ultrasons.

La comparaison du signal de détection avec des formes préenregistrées se fait en général, selon l'art antérieur, par comparaison entre des valeurs moyennes relevées sur un signal constitué par une récurrence de créneaux, l'onde ultrasonore n'étant émise que pendant le créneau à chaque période.

En effet, les alarmes embarquées sont des appareils consommateur d'énergie électrique. Comme le véhicule est à l'arrêt, cette énergie électrique est tirée sur la batterie de démarrage. Cette disposition exige que les circuits électroniques, qui fonctionnent pendant l'arrêt du véhicule, réduisent au strict nécessaire leur consommation d'énergie. De ce fait, on a déjà proposé des systèmes d'alarme volumétrique à ultrasons qui fonctionnent pendant des périodes temporelles séparées par des zones de silence pendant lesquelles la consommation électrique est réduite.

En réalisant une moyenne des signaux reçus sur une certaine durée, il est possible de réaliser une alarme dans des conditions de consommation électrique réduites.

Cependant, il est apparu à l'usage, que des cas d'alarme peuvent être masqués par le calcul de la moyenne. En effet, on a remarqué que certains signaux pouvaient varier d'une manière telle que, sur une longue période, leur moyenne était identique à celle d'une situation de non alarme. De ce fait, la situation d'alarme est cachée et le système est inopérant.

Le document EP-A-368 303 enseigne un dispositif de surveillance d'un habitacle de véhicule conforme au préambule de la revendication 8.

Le procédé mis en oeuvre par ce dispositif consiste à émettre une onde ultrasonore pendant une première durée déterminée correspondant à un créneau d'émission, et ce, de façon répétée, à mesurer pendant une seconde durée déterminée le niveau du champ d'interférences qui s'établit dans l'habitacle, à numériser le signal mesuré et à comparer la valeur des échantillons à celle des échantillons correspondant à une mesure précédente, et enfin à enregistrer la valeur courante des échantillons pour servir de référence pour une mesure ultérieure.

Lorsque la différence entre la valeur courante des échantillons et la valeur de référence desdits échantillons est supérieure à un seuil, une alarme est générée.

Avec un dispositif de ce type, il convient d'attendre que le champ d'interférence soit définitivement établi et stabilisé pour réaliser la mesure. Ceci présente l'inconvénient d'avoir à émettre l'onde ultrasonore pendant une durée encore relativement longue, et donc d'être encore imparfait du point de vue de la consommation électrique du dispositif.

De plus, la première et la seconde durées déterminées, correspondant respectivement au temps d'émission et de mesure, sont déterminées à l'avance en fonction du volume de l'espace à surveiller. Ces durées ne dépendent donc pas de la disposition d'éventuels objets présents dans l'habitacle et donc de la configuration de l'espace à surveiller, qui peut cependant être variable d'une utilisation à l'autre.

Le document DE-A-38 05 439 divulgue un procédé de surveillance d'un espace par émission d'une impulsion ultrasonore définie et analyse de l'onde réfléchie directe isolée. Un générateur produit une impulsion d'une durée de 200 µs qui contient par exemple huit oscillations avec une fréquence de 40 kHz; l'impulsion atteint le récepteur après 3 ms. Le procédé décrit dans ce document ne permet donc pas de réaliser une moyenne sur plusieurs signaux reçus.

La présente invention concerne un procédé et un dispositif portant remède à ces inconvénients de l'art antérieur.

En effet, l'invention concerne, selon les caractéristiques de la revendication 1, un procédé d'analyse d'un rayonnement, dit onde d'analyse, comme une onde ultrasonore s'établissant, par l'intermédiaire d'un signal d'émission, de manière répétitive, pendant des créneaux d'émission, dans un volume et portant la trace d'un phénomène à détecter, dans lequel

- on détermine en fonction des caractéristiques du rayonnement établi dans le volume un instant de début d'analyse, un instant de fin d'analyse et une fréquence d'échantillonnage ; puis, à chaque répétition du rayonnement,
- on réalise un échantillonnage d'un signal reçu par un détecteur du rayonnement, et à mémoriser lesdits échantillons à des adresses prédéterminées d'une première mémoire,
- on exécute une opération de détection du phénomène en tenant compte de la valeur de chacun desdits échantillons enregistrés dans ladite première mémoire et de la valeur du résultat de la même opération lors d'au moins une répétition précédente, ladite valeur du résultat étant mémorisée dans une seconde mémoire,

- on traite le résultat puis on mémorise sa nouvelle valeur dans ladite seconde mémoire,
  et dans lequel l'analyse est réalisée pendant des créneaux de réception lorsque les créneaux d'émission sont inactifs.

L'invention concerne aussi un dispositif mettant en oeuvre le procédé de l'invention selon les caractéristiques de la revendication 8, et un système d'alarme comportant un tel dispositif selon les caractéristiques de la revendication 11.

D'autres avantages et caractéristiques de la présente invention seront mieux compris à l'aide de la description et des figures qui sont :

- la figure 1 : deux diagrammes d'un signal ultrasonore d'émission E et d'un signal ultrasonore de réception R,
- la figure 2 une courbe représentative de l'énergie acoustique reçue Er lors d'une période de réception de la figure 1,
- la figure 3 une courbe de l'énergie reçue dans deux cas différents,
- la figure 4 une suite de signaux de réception,
- la figure 5 une courbe de contrôle de la condition d'alarme,- la figure 6 un schéma de l'échantillonnage selon l'invention,
- la figure 7 un schéma d'un mode de réalisation d'un dispositif de réception selon l'invention,
- la figure 8 un organigramme de fonctionnement de l'invention.

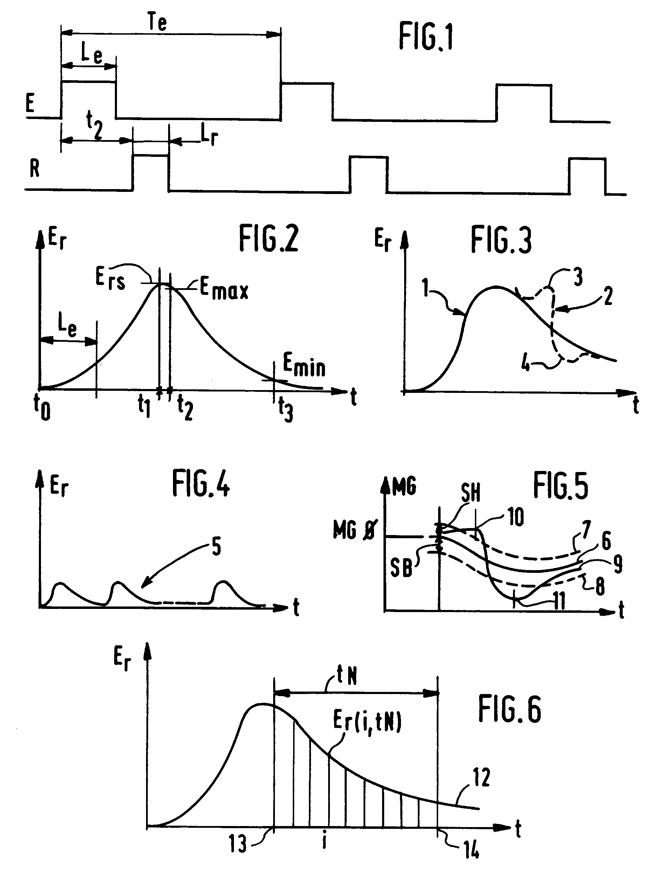

A la figure 1, on a représenté sur deux chronogrammes distincts la succession des instants d'émission et de réception selon le procédé de l'invention dans le cas où l'onde d'analyse est une onde ultrasonore établie dans un volume constitué par l'habitacle d'un véhicule sous alarme. D'une manière générale, l'invention exploite le fait qu'un rayonnement établi dans un volume, peut servir d'onde d'analyse pour détecter un phénomène dans le volume.

Le premier chronogramme E est constitué par une succession de créneaux carrés, séparés par une période Te, chaque créneau ayant une largeur Le durant laquelle un émetteur d'ultrasons est activé et engendre dans le volume de l'habitacle surveillé une certaine quantité d'énergie acoustique. Selon l'invention, le rayonnement est déterminé au point de vue de son spectre fréquentiel, de son énergie et de sa répartition dans le temps en fonction du volume sous analyse. Le rayonnement ou onde d'analyse peut être provoqué par un émetteur, ou être naturel comme un dégagement de chaleur (rayonnement infrarouge). Dans ce cas E, l'onde d'analyse s'établit de manière répétitive à une fréquence fixe $1/Te$. Elle se répète périodiquement pendant des fenêtres temporelles d'émission ou créneaux d'émission, dont la durée est prédéterminée.

Sur le second chronogramme R, on a représenté une succession de créneaux d'activation des circuits de réception du détecteur volumétrique d'ultrasons selon l'invention. Dans ce cas R, on fixe un instant de début d'analyse et un instant de fin d'analyse en fonction des caractéristiques du rayonnement établi dans le volume. Une analyse de l'onde répétitive peut avoir lieu à chaque répétition de l'onde d'analyse comme selon la figure 1. Mais, elle peut avoir lieu lors de certaines répétitions seulement.

De façon à réduire au strict nécessaire la quantité d'énergie électrique consommée par les circuits, on réduit la largeur du créneau de réception à une largeur Lr dont la valeur sera explicitée à l'aide de la figure 2.

Le début du créneau d'activation des circuits de réception est distant d'une durée t2 par rapport au front montant du créneau d'activation d'une période d'analyse. On remarque que le système d'alarme selon l'invention fonctionne à la fréquence Te, mais qu'il n'est actif et donc consommateur d'énergie que pendant une fraction de cette durée, cette fraction s'exprimant par le rapport $(Le + Lr)/Te$ .

A la figure 2, on a représenté l'énergie reçue pendant une période Te. A l'instant t0, le système volumétrique émet une salve d'ultrasons pendant une durée Le. Pendant ce temps, la chaîne d'analyse reçoit une énergie ultrasonore qui augmente jusqu'à une valeur maximale Ers, atteinte à l'instant t1. Cette valeur maximale Ers est déterminée par un réglage de l'appareil. Il correspond au seuil de saturation de la chaîne d'analyse installée dans l'habitacle. La détection d'une condition d'alarme à cette limite de saturation ne présente pas un grand intérêt. Selon l'invention on attend que le niveau de l'énergie reçue moyenne atteigne une valeur maximale Emax, inférieure à la valeur de saturation, cette valeur n'étant pas fixée de manière rigide, mais étant garantie à un instant de début d'analyse par la montée d'un créneau de réception R à compter d'une durée t2 par rapport à l'instant t0, cette durée t2 pouvant être ajustée par un asservissement en temps réel sur une condition de saturation.

L'énergie reçue Er diminue ensuite puisque depuis l'instant t0 + Le, le système n'est plus émetteur. La durée Lr du créneau d'activation du circuit de réception permet d'atteindre au moins un instant t3 ( t3 = t2 + Lr ) de fin d'analyse où, lors du réglage de l'appareil, on atteint la valeur minimale du signal de réception distinguable du bruit par la chaîne de réception. Cette valeur Lr peut être asservie en fonction du rapport signal/bruit de la chaîne de réception.

Ainsi, selon l'invention, l'analyse est réalisée pendant des créneaux d'activation des circuits de réception, dits créneaux de réception, lorsque les créneaux d'émission sont inactifs.

A la figure 3, on a représenté deux cas de réception de l'énergie Er pendant une fenêtre d'activation du circuit de réception. La courbe 1 correspond à une courbe de réglage selon laquelle on atteint d'abord le seuil de saturation de l'ensemble d'alarme, et on laisse le système en onde évanescente. Cette courbe 1 est typiquement une forme d'onde reçue pendant une période d'analyse en l'absence d'une situation d'alarme. La courbe en pointillés 2 correspond à une forme d'onde reçue pendant une période d'analyse au cours de laquelle une perturbation a été détectée par le système ultrasonore. Dans ce cas, le signal Er oscille autour de cette valeur moyenne 1 et présente donc deux pics 3 et 4 de part et d'autre de la courbe 1. Dans ces conditions, on remarque que l'énergie totale reçue par le système de détection pendant une période d'analyse pourrait être identique à la valeur totale correspondant à la courbe 1. De ce fait, si le pic 3 correspond à un événement d'alarme, le système d'alarme ne peut détecter cette intrusion. Cet effet de masque arrive si on réalise une moyenne de l'énergie reçue pendant plusieurs périodes d'analyse.

A la figure 4, on a représenté une succession d'ondes de réception 5 au cours du temps. Dans une précédente demande, le demandeur a déjà proposé de réaliser une moyenne glissante sur un nombre prédéterminé (par exemple 8) de créneaux de réception de l'onde ultrasonore. Dans le procédé de l'invention, on exécute une opération de détection du phénomène comme une intrusion dans l'habitacle, si l'invention est appliquée à une alarme volumétrique. Cette détection tient compte de la valeur de l'énergie de l'onde Er(T) détectée lors de la période Te en cours et de celle du résultat de la détection précédente. Dans un mode de réalisation préféré, on surveille en permanence lors de chaque période Te d'analyse la valeur de la moyenne glissante qui peut être calculée par la formule :

$$MG(T) = [MG(T-1) \times 7 + Er(T)] / 8.$$ La moyenne glissante MG(T) est donc une valeur qui évolue au cours du temps, et qui constitue le résultat de la détection.

Selon l'invention, il est proposé de surveiller cette moyenne glissante au cours du temps, selon une procédure nouvelle et avantageuse, qui évite des effets de masque.

A la figure 5, on a représenté une évolution de la moyenne glissante au cours du temps. Dans l'hypothèse où aucune perturbation ne vient troubler l'habitacle, la moyenne glissante devrait être une droite horizontale coupant l'axe MG des ordonnées à une valeur MG0.

Afin de permettre une adaptation automatique de l'alarme à des variations climatiques par exemple ou à toutes autres variations lentes détectées sur le détecteur de l'invention, on a proposé de permettre que cette valeur de moyenne stable soit périodiquement recalculée de façon à suivre les évolutions de l'environnement de l'habitacle. De ce fait, la moyenne glissante des valeurs de l'énergie reçue sur plusieurs périodes d'analyse correspondant à l'absence de perturbation est une courbe 6 qui peut évoluer lentement au cours du temps.

La condition d'alarme est synthétisée par deux lignes en traits interrompus 7 et 8 de part et d'autre de cette courbe moyenne 6. Elles permettent de déterminer un seuil haut SH et un seuil bas SB entre lesquels la condition d'alarme n'est pas réalisée. Dans un exemple de réalisation préféré, on fixe un écart E prédéterminé et les valeurs SB et SH sont données à chaque instant ti par les relations:

$$SB = MG(ti) - E,$$

$$SH = MG(ti) + E.$$

La courbe 9 représente les évolutions de la moyenne glissante lors d'un cas réel dans lequel deux perturbations 10 et 11 ont eu lieu. Dans ces cas, l'alarme est déclenchée puisque effectivement les seuils 7 et 8 ont été dépassés.

En comparant les courbes de la figure 4 à la courbe 9 de la figure 5, on constate qu'il est possible aussi que certaines conditions d'alarme particulières, parce qu'elles n'apparaîtraient qu'en des endroits différents de chaque créneau de réception, soient masquées par l'évolution de la moyenne glissante de la figure 5.

Afin de porter remède à cet inconvénient de l'art antérieur, la présente invention concerne un procédé selon lequel on échantillonne le signal de réception pendant la partie utile de chaque créneau de réception. Ces échantillons sont alors analysés pendant une opération de détection comportant deux phases:

- une première phase de calcul d'une moyenne glissante,
- une seconde phase de test d'une condition de détection proprement dite.

A la figure 6, on a représenté une courbe représentative de l'énergie acoustique reçue Er pendant un créneau de durée tr. A l'instant 13, on démarre un échantillonnage de l'onde d'analyse pendant une répétition de l'onde d'analyse, jusqu'à l'instant 14 correspondant à la fin de la période d'analyse tN. On peut ainsi constituer une suite de n échantillons Er (i,tN) de l'onde acoustique reçue pendant une période tN. Selon le procédé de l'invention, une moyenne glissante est calculée pour chacun de ces échantillons. Ainsi, on obtiendra une moyenne glissante pour les échantillons de même rang i au cours d'une succession de périodes tN d'analyse. Dans un mode préféré de réalisation, la moyenne glissante de rang i lors de l'analyse de la répétition (ou période) tN est calculée selon la formule:

$$MG(i,tN) = [MG(i,tN-1) \times 7 + Er(i,tN))]/8$$

ou d'une manière plus générale

$$MG(i,tN) = [MG(i,tN-1) (P-1) + Er(i,tN)]/P$$

où P, dans un mode de réalisation préféré est un nombre de la forme $P = 2^k$

avec k un entier de moins de $n_p$ bits si on utilise un microprocesseur ou un circuit de même genre travaillant sur des mots binaires de $n_p$ bits.

Lors de la seconde phase de l'opération de détection, la moyenne glissante est comparée à une valeur de détection du phénomène que l'on cherche à détecter. Dans le cas d'une alarme volumétrique, le bris d'une glace, l'intrusion dans l'habitacle ou tout autre événement du même genre provoque une variation locale de la courbe Er(t) lors d'une période d'analyse. En comparant chacun des échantillons MG(i,tN) à une valeur de détection VD, on peut donc traiter le cas d'un phénomène qui serait masqué par le moyennage ou d'un phénomène qui sur quelques périodes d'analyse ne modifierait pas la valeur moyenne de l'énergie reçue par la chaîne d'analyse.

Pour exécuter cette détection, une mémoire contient un nombre p de valeurs de détection VD(i), chaque valeur MG(i,tN) étant comparée à la valeur de Seuil de détection VD(i). Si le résultat de la comparaison est négatif, on a détecté le phénomène sans analyse et dans le cas d'une alarme volumétrique, on peut déclencher l'alarme. Dans un mode de réalisation préféré, on tient compte, comme selon la figure 5, d'une plage de valeurs autour de VD(i) avant de placer le résultat négatif.

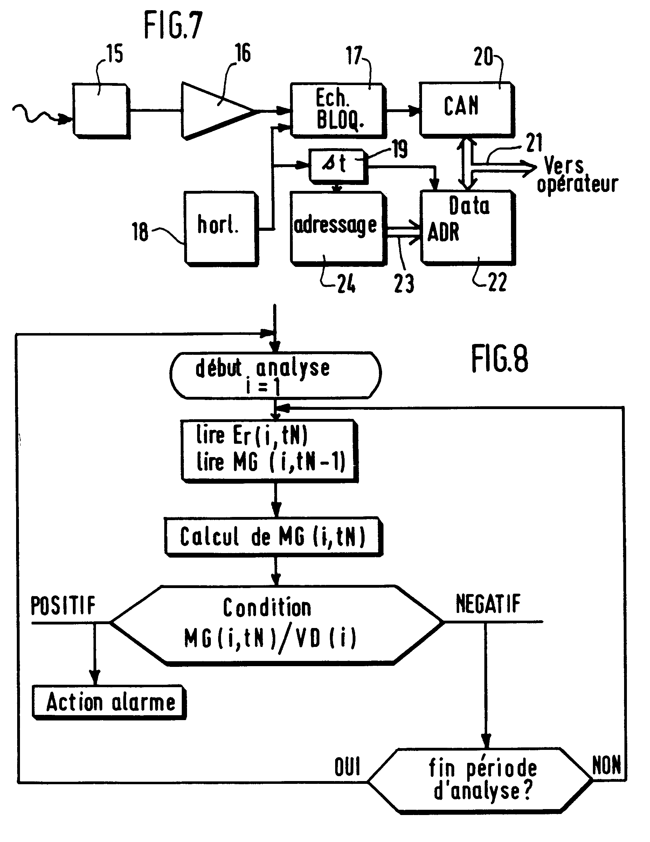

A la figure 7, on a représenté un dispositif selon l'invention. Un transducteur acoustique 15 reçoit l'onde acoustique évanouissante rayonnée dans l'habitacle. Le signal de sortie du transducteur est fourni à un circuit de mise en forme 16 comportant notamment un amplificateur, dont la sortie est transmise à l'entrée d'un échantillonneur bloqueur 17. L'échantillonneur bloqueur 17 comporte une entrée d'horloge connectée à une horloge 18 qui est activée par un signal dont le chronogramme R est représenté à la figure 1. L'horloge émet une succession d'impulsions en nombre n, au moins entre l'instant 13 et l'instant 14 de la figure 6. Entre deux impulsions d'échantillonnage i et i + 1, la valeur de l'énergie reçue est bloquée à la sortie Out de l'échantillonneur bloqueur 17. Le signal de sortie Out de l'échantillonneur bloqueur 17 est transmis à l'entrée d'un convertisseur analogique numérique 20. Le convertisseur analogique numérique 20 reçoit avec un retard convenable introduit par un circuit 19, un signal de commande d'échantillonnage 26 provenant de l'horloge 18. La sortie du convertisseur analogique numérique 20 est un mot binaire 21, par exemple sur huit bits, représentant la valeur numérique Er(i,TN) de rang i pendant la Nième récurrence TN.

Le circuit comporte d'autre part une mémoire vive, comme une mémoire RAM, 22 dont les entrées de données sont connectées à la sortie 21 du convertisseur analogique numérique 20.

D'autre part, la mémoire 22 comporte des entrées d'adresses 23 activées par un circuit de commande d'adressage 24 commandé par l'horloge 18 au même rythme et en synchronisme avec la conversion analogique numérique 20.

De ce fait, selon l'invention, une adresse de la mémoire 22 contient à chaque période TN d'analyse la valeur courante de l'échantillon de rang i de l'échantillon de l'énergie reçue Er(i,TN).

D'autre part, la mémoire 22 contient dans une seconde zone à chaque instant la moyenne glissante MG(i,TN) calculée sur P échantillons antérieurs de Er(i,TN). Ce calcul est effectué par un opérateur arithmétique non représenté au dessin.

Enfin l'opérateur exécute, après calcul de MG(i), une seconde phase de comparaison à des valeurs préenregistrées VD(i) de détection. Si chaque moyenne glissante de rang i MG(i,TN) est comprise entre VD(i)+SH et VD(i)-SB, alors le résultat de la détection est négatif. Dans le cas contraire, le résultat de la détection est positif. Si le dispositif de la figure 7 est connecté à une alarme, le résultat positif de la détection déclenche cette alarme.

Dans un mode de réalisation préféré, chaque valeur VD(i) est périodiquement remise à jour par un test d'autoapprentissage qui permet d'adapter la chaîne d'analyse aux conditions ambiantes. En effet, celles-ci font évoluer aussi bien le rapport signal/bruit que le seuil de saturation et de ce fait, selon l'invention, le dispositif de l'invention permet de tester l'apparition d'une dérive à un seuil. Si le seuil est dépassé, le dispositif réalise un nouveau réglage des instants de début et de fin de réception et/ou d'émission, fixe éventuellement les sensibilités et l'énergie rayonnée ainsi que la fréquence d'échantillonnage.

A la figure 8, on a représenté un organigramme du fonctionnement d'un microprocesseur permettant d'exécuter le procédé de l'invention.

Lors de chaque période TN, un compteur initialise la variable d'échantillonnage i à la valeur 1. Pour chaque valeur de i le microprocesseur lit la valeur Er(i,TN) puis lit la valeur MG(i,TN-1).

Ces deux valeurs sont fournies au microprocesseur qui calcule la nouvelle valeur de la moyenne glissante et l'affecte à la variable MG(i,TN). Cette nouvelle valeur de la moyenne glissante de rang i est alors mémorisée à la place de la valeur précédente dans la mémoire 22.

Enfin le microprocesseur teste la condition d'alarme par rapport à la nouvelle valeur de la moyenne glissante et en fonction du résultat positif ou négatif, déclenche ou non une alarme. Cette alarme comporte une entrée d'activation telle qu'un résultat positif de la comparaison la déclenche. On passe ensuite à un test de fin de boucle d'échantillonnage sur la valeur de la variable i. Si cette dernière valeur est atteinte, on passe en état d'attente jusqu'à la période suivante TN + 1. Si le dernier échantillon n'est pas prélevé, on incrémente la variable d'une unité et on lit les valeurs pour i = i + 1.

**Revendications**

1. Procédé d'analyse d'un rayonnement, dit onde d'analyse, comme une onde ultrasonore s'établissant, par l'intermédiaire d'un signal d'émission, de manière répétitive, pendant des créneaux d'émission (Le), dans un volume et portant la trace d'un phénomène à détecter, dans lequel

   - on détermine en fonction des caractéristiques du rayonnement établi dans le volume un instant de début d'analyse (t2), un instant de fin d'analyse (t3) et une fréquence d'échantillonnage ; puis, à chaque répétition du rayonnement,
   - on réalise un échantillonnage d'un signal reçu par un détecteur du rayonnement (15), et on mémorise lesdits échantillons (Er (i,tn)) à des adresses prédéterminées d'une première mémoire,
   - on exécute une opération de détection du phénomène en tenant compte de la valeur de chacun desdits échantillons enregistrés dans ladite première mémoire et de la valeur du résultat de la même opération lors d'au moins une répétition précédente, ladite valeur du résultat étant mémorisée dans une seconde mémoire,
   - on traite le résultat puis on mémorise sa nouvelle valeur dans ladite seconde mémoire,
     et dans lequel l'analyse est réalisée pendant des créneaux de réception ($L_r$) lorsque les créneaux d'émission ($L_e$) sont inactifs.

2. Procédé selon la revendication 1, caractérisé en ce que la durée et/ou l'amplitude ou l'énergie desdits créneaux d'émission (Le) est réglée en fonction du niveau de saturation (Ers) du volume analysé.

3. Procédé selon la revendication 1, caractérisé en ce que l'instant de début d'analyse (t2) est déterminé par le test d'une condition de saturation du volume analysé.

4. Procédé selon la revendication 1, caractérisé en ce que l'instant de fin d'analyse est déterminé par le test d'une condition de seuil fixé sur le rapport signal/bruit de la chaîne d'analyse.

5. Procédé selon la revendication 1, caractérisé en ce que la fréquence d'échantillonnage est déterminée de façon à ce que le nombre d'échantillons d'analyse lors d'une répétition de l'onde ultrasonore est une constante prédéterminée.

6. Procédé selon la revendication 5, caractérisé en ce que l'opération de détection comporte une phase de calcul d'une valeur d'une moyenne glissante (MG(i,tN)) lors de la répétition (tN) établie pour chaque échantillon (Er(i,tN)) de même rang (i) selon la relation :

$$MG(i,tN) = [MG(i,tN-1) \times (2^K-1) + Er(i,tN)]/2^K$$

   chaque valeur de la moyenne glissante (MG(i,tN)) étant ensuite enregistrée à une adresse prédéterminée de la seconde mémoire.

7. Procédé selon la revendication 6, caractérisé en ce que l'opération de détection comporte aussi une phase de comparaison de chaque valeur de la moyenne glissante (MG(i,tN)) d'un rang donné à une valeur de détection prédéterminée (VD(i)) pour chaque rang, le résultat de la comparaison étant placé négatif en tenant compte de seuils prédéterminés haut (SH (i)) et
   bas (SB (i)) autour de la valeur prédéterminée (VD(i)) et en ce que le résultat de la détection est obtenu à l'issue de cette seconde phase.

8. Dispositif comportant un transducteur d'émission ou émetteur d'ultrasons, un transducteur (15) de réception d'un rayonnement comme une onde émise par ledit émetteur d'ultrasons dans un volume à analyser, un convertisseur analogique/numérique (20) et une mémoire (22) contenant dans une première zone les valeurs d'une nombre (n) des échantillons numérisés (Er(i,tN)) par ledit convertisseur (20), caractérisé en ce qu'il met en oeuvre le procédé selon l'une des revendications 1 à 7, et en ce qu'il comporte aussi un échantillonneur - bloqueur (17) dont une entrée est connectée à la sortie dudit transducteur (15) de réception et dont l'entrée d'horloge est asservie à une fréquence d'échantillonnage produite par une horloge (18) produisant le nombre (n) impulsions d'échantillonnage pendant une période d'analyse de durée ($L_r$) et début ($t_2$) prédéterminés et activant un circuit d'adressage (24) et d'écriture de la mémoire (22).

9. Dispositif selon la revendication 8, caractérisé en ce qu'il comporte aussi un opérateur calculant une moyenne glissante (MG (i,tN)) à partir d'une valeur précédente enregistrée dans une seconde zone de la mémoire (22) puis exécutant pour chaque valeur de la moyenne glissante (MG (i,tN)) une comparaison à une valeur (VD(i)) préenregistrée dans une troisième zone de la mémoire (22), les valeurs préenregistrées (VD(i)) étant périodiquement remises à jour en fonction des conditions ambiantes du volume analysé par auto-apprentissage.

**10.** Dispositif selon la revendication 8 ou 9, caractérisé en ce que le dispositif est réalisé par un microprocesseur muni d'un convertisseur numérique analogique, une mémoire RAM et un opérateur arithmétique.

**11.** Système d'alarme comportant un dispositif d'analyse selon la revendication 9, caractérisé en ce qu'il comporte une alarme dont l'entrée d'activation est activée par le résultat positif de la comparaison d'une nombre (n) des valeurs des moyennes glissantes (MG(i,tN)) aux valeurs (VD(i)) préenregistrées.

## Claims

**1.** A method for the analysis of radiation referred to as an analyte wave, such as an ultrasonic wave, which is set up repetitively through an emission signal during emission pulses (Le) within a space, and which carries the waveform of a phenomenon to be detected, wherein

- an instant (t2) of commencement of analysis, an instant (t3) of termination of analysis, and a sampling frequency are determined as a function of the characteristics of the radiation set up within the space; and then, at each repetition of the radiation,
- a signal received by a radiation detector (15) is sampled, and the said samples (Er(i,tn)) are memorised in predetermined addresses in a first memory,
- an operation is carried out to detect the phenomenon having regard to the value of each of the said samples entered in the said first memory, and to the value of the result of the same operation during at least one previous repetition, the said value of the result being memorised in a second memory,
- the result is processed, and its new value is then memorised in the said second memory, and wherein the analysis is carried out during reception pulses ($L_r$) when the emission pulses ($L_e$) are inactive.

**2.** A method according to Claim 1, characterised in that the duration and/or the amplitude or the energy of the said emission pulses (Le) is adjusted as a function of the saturation level (Ers) of the space under analysis.

**3.** A method according to Claim 1, characterised in that the instant (t2) of commencement of the analysis is determined by the test for a condition of saturation of the space under analysis.

**4.** A method according to Claim 1, characterised in that the instant of termination of analysis is determined by the test for a threshold condition which depends on the signal-to-noise ratio of the analysis equipment.

**5.** A method according to Claim 1, characterised in that the sampling frequency is determined in such a way that the number of samples for analysis during one repetition of the ultrasonic wave is a predetermined constant.

**6.** A method according to Claim 5, characterised in that the detection operation includes a phase in which a value of a sliding average (MG(i,tN)) is computed during the repetition (tN) set up for each sample (Er(i,tN)) with the same sampling interval (i), in accordance with the relationship:

$$MG(i,tN) = [MG(i,tN-1) \times (2^K-1) + Er(i,tN)]/2^K,$$

each value of the sliding average (MG(i,tN)) being subsequently entered in a predetermined address of the second memory.

**7.** A method according to Claim 6, characterised in that the detection operation further includes a phase in which each value of the sliding average (MG(i,tN)), having a given sampling interval, is compared with a detection value (VD(i)) predetermined for each sampling interval, the result of the comparison being made negative having regard to predetermined high (SH(i)) and low (SB(i)) thresholds about the predetermined value (VD(i)), and in that the result of the detection is obtained at the end of this second phase.

**8.** Apparatus comprising an ultrasound emission transducer or emitter, a transducer (15) for the reception of radiation such as a wave emitted by the said ultrasound emitter in a space to be analysed, an analog/digital converter (20), and a memory (22) containing in a first zone the values of a number (n) of samples (Er(i,tN)) digitised by the said converter (20), characterised in that it performs the method in accordance with one of Claims 1 to 7, and in that it further comprises a blocker-sampler (17), one input of which is connected to the output of the said receiving transducer (15), with its clock input being dependent on a sampling frequency produced by a timer (18) which produces the number (n) of sampling pulses during a period of analysis having a predetermined duration (Lr) and instant of commencement ($t_2$), and which activates an address and writing circuit (24) for the memory (22).

9. Apparatus according to Claim 8, characterised in that it further includes an operator for computing a sliding average (MG(i,tN)) from a preceding value entered in a second zone of the memory (22), and for then carrying out, for each value of the sliding average (MG(i,tN)), a comparison with a value (VD(i)) entered beforehand in a third zone of the memory (22), the previously entered values (VD(i)) being periodically adjusted by automatic monitoring as a function of the ambient conditions in the space under analysis.

10. Apparatus according to Claim 8 or Claim 9, characterised in that the apparatus comprises a microprocessor having an analog/digital converter, a random access memory, and an arithmetical operator.

11. An alarm system comprising an analytical apparatus according to Claim 9, characterised in that it includes an alarm, the activating input of which is activated by the positive result of the comparison of a number (n) of the values of the sliding averages (MG(i,tN)) with the previously entered values (VD(i)).

## Patentansprüche

1. Verfahren zur Analyse einer Strahlung, die als Analysewelle bezeichnet wird, wie zum Beispiel einer Ultraschallstrahlung, die sich über ein Sendesignal wiederholt während der jeweiligen Sendeimpulse (Le) in einem Raum aufbaut und Anzeichen eines zu erfassenden Vorgangs enthält,

- wobei in Abhängigkeit von den Merkmalen der in dem Raum aufgebauten Strahlung ein Zeitpunkt für den Analyseanfang (t2), ein Zeitpunkt für das Analyseende (t3) und eine Abtastfrequenz bestimmt werden, woraufhin bei jeder Wiederholung der Strahlung
- eine Abtastung eines empfangenen Signals durch einen Strahlungssensor (15) erfolgt und die besagten Abtastwerte (Er (i,tn)) unter vorbestimmten Adressen eines ersten Speichers abgespeichert werden,
- wobei eine Operation zur Erfassung des Vorgangs unter Berücksichtigung dem Werts jeder der besagten Abtastungen erfolgt, die in dem besagten ersten Speicher abgespeichert werden, sowie des Werts des Ergebnisses der gleichen Operation bei wenigstens einer vorangehenden Wiederholung, wobei der besagte Wert des Ergebnisses in einem zweiten Speicher abgespeichert wird,
- wobei das Ergebnis verarbeitet und anschließend sein neuer Wert in dem besagten zweiten Speicher abgespeichert wird
- und wobei die Analyse während der Empfangsimpulse (Lr) ausgeführt wird, wenn die Sendeimpulse (Le) inaktiv sind.

2. Verfahren nach Anspruch 1 , **dadurch gekennzeichnet**, daß die Dauer und/oder die Amplitude bzw. die Energie der besagten Sendeimpulse (Le) in Abhängigkeit vom Sättigungspegel (Ers) des analysierten Raums eingestellt wird.

3. Verfahren nach Anspruch 1 , **dadurch gekennzeichnet**, daß der Zeitpunkt für den Analyseanfang (t2) durch den Test einer Sättigungsbedingung des analysierten Raums bestimmt wird.

4. Verfahren nach Anspruch 1 , **dadurch gekennzeichnet**, daß Zeitpunkt für das Analyseende durch den Test einer Schwellenwertbedingung bestimmt wird, die nach dem Rauschabstand der Analysestrecke festgelegt ist.

5. Verfahren nach Anspruch 1 , **dadurch gekennzeichnet**, daß die Abtastfrequenz so festgelegt wird, daß die Anzahl der Analyseabtastungen bei einer Wiederholung der Ultraschallwelle eine vorbestimmte Konstante ist.

6. Verfahren nach Anspruch 5 , **dadurch gekennzeichnet**, daß die Erfassungsoperation eine Phase zur Berechnung des Werts eines gleitenden Mittelwerts (MG(i,tN)) bei der festgesetzten Wiederholung (tN) zu jedem Abtastwert (Er(i,tN)) mit gleichem Rang (i) nach der folgenden Gleichung umfaßt:

$$MG(i,tN) = [MG(i,tN-1) \times (2^K-1) + Er(i,tN)]/2^K$$

wobei anschließend jeder Wert des gleitenden Mittelwerts (MG(i,tn)) unter einer vorbestimmten Adresse des zweiten Speichers abgespeichert wird.

7. Verfahren nach Anspruch 6 , **dadurch gekennzeichnet,** daß die Erfassungsoperation außerdem eine Phase mit einem Vergleich jedes Werts (MG(i,tN)) des gleitenden Mittelwerts eines gegebenen Rangs mit einem vorbestimmten Erfassungswert (VD(i)) zu jedem Rang umfaßt, wobei das Ergebnis des Vergleichs unter Berücksichtigung eines vorbestimmten oberen (SH (i)) und unteren Schwellenwerts (SB (i)) um den vorbestimmten Wert (VD(i)) herum negativ gesetzt wird, und daß das Ergebnis der Erfassung nach Abschluß dieser zweiten Phase ermittelt wird.

8. Vorrichtung, bestehend aus einem Senderwandler oder Ultraschallsender, einem Empfängerwandler (15) für eine Strahlung, zum Beispiel eine Welle, die durch den besagten Ultraschallsender in einen zu analysierenden Raum abgestrahlt wird, sowie aus einem Analog-Digital-Umsetzer (20) und einem Speicher (22), der in einem ersten Bereich die Werte einer Anzahl (n) der durch den besagten Umsetzer (20) digitalisierten Abtastwerte (Er(i,tN)) enthalt , **dadurch gekennzeichnet,** daß sie das Verfahren nach einem der Ansprüche 1 bis 7 anwendet und daß sie außerdem einen Sperrabtaster (17) umfaßt, von dem ein Eingang mit dem Ausgang des besagten Empfängerwandlers (15) verbunden ist und dessen Takteingang durch eine Abtastfrequenz gesteuert wird, die durch einen Taktgeber (18) erzeugt wird, der die Anzahl (n) von Abtastimpulsen während einer Analyseperiode mit vorbestimmter Dauer (Lr) und vorbestimmtem Anfang (t2) erzeugt und eine Adressier- (24) und Schreibschaltung für den Speicher (22) aktiviert.

9. Vorrichtung nach Anspruch 8 , **dadurch gekennzeichnet,** daß sie außerdem ein Rechenwerk umfaßt, das einen gleitenden Mittelwert (MG (i,tN)), ausgehend von einem vorangehenden Wert, berechnet, der in einem zweiten Bereich des Speichers (22) abgespeichert ist, und anschließend zu jedem Wert des gleitenden Mittelwerts (MG (i,tN)) einen Vergleich mit einem Wert (VD(i) ausführt, der in einem dritten Bereich des Speichers (22) abgespeichert ist, wobei die voraufgezeichneten Werte (VD(i)) in Abhängigkeit von den Umgebungsbedingungen des analysierten Raums periodisch mittels Selbstlernen aktualisiert werden.

10. Vorrichtung nach Anspruch 8 oder 9 , **dadurch gekennzeichnet,** daß die Vorrichtung durch einen Mikroprozessor ausgeführt ist, der mit einem Analog-Digital-Umsetzer, einem RAM-Speicher und einem Rechenwerk ausgestattet ist.

11. Alarmanlage mit einer Analysevorrichtung nach Anspruch 9 , **dadurch gekennzeichnet**, daß sie einen Alarm umfaßt, dessen Aktivierungseingang durch das positive Ergebnis des Vergleichs einer Anzahl (n) der Werte der gleitenden Mittelwerte (MG (i,tN)) mit den voraufgezeichneten Werten (VD(i)) aktiviert wird.

FIG.1

FIG.2

FIG.3

FIG.4

FIG.5

FIG.6

## FIG.7

## FIG.8